## Europäisches Patentamt
## European Patent Office
## Office européen des brevets

(11) Publication number: **0 181 745 B1**

(12) **EUROPEAN PATENT SPECIFICATION**

(45) Date of publication of patent specification: **25.04.90**

(21) Application number: **85307916.8**

(22) Date of filing: **31.10.85**

(51) Int. Cl.⁵: **B 60 R 22/02, B 60 R 22/12**

(54) Rotary arm for a seat belt forwarding device.

(30) Priority: **02.11.84 JP 166604/84**

(43) Date of publication of application:
**21.05.86 Bulletin 86/21**

(45) Publication of the grant of the patent:
**25.04.90 Bulletin 90/17**

(84) Designated Contracting States:
**DE FR GB**

(56) References cited:
**EP-A-0 175 493**
**DE-A-2 312 890**

(73) Proprietor: **HONDA GIKEN KOGYO KABUSHIKI KAISHA**
**1-go, 1-ban, Minami-Aoyama 2-chome Minato-ku Tokyo 107 (JP)**

(72) Inventor: **Tabata, Hiroshi**
**770 Hiramatsuhonmachi**
**Utsunomiya-shi Tochigi-ken (JP)**
Inventor: **Sugama, Takayuki**
**210, 354-9 Shukugochi**
**Utsunomiya-shi Tochigi-ken (JP)**
Inventor: **Saruwatari, Hidetoshi**
**1227-8 Hoshakuji Takanezawa-machi**
**Shioya-gun, Tochigi-ken (JP)**
Inventor: **Higuchi, Kazuo**
**5-10 Hoshigaoka 2-chome**
**Utsunomiya-shi Tochigi-ken (JP)**

(74) Representative: **MacFarlane, John Anthony Christopher et al**
**HASELTINE LAKE & CO. Hazlitt House 28, Southampton Buildings Chancery Lane London WC2A 1AT (GB)**

Courier Press, Leamington Spa, England.

## Description

This invention relates to a rotary arm for a seat belt forwarding device (seat belt reacher device) of a type in which an end of a seat belt is attached to a free end of the rotary arm which is adapted to be driven by a rotary unit, and in particular to such a rotary arm which will not be an obstacle in getting into the rear seat of the vehicle when the rotary arm is in its backwardly inclined position.

It is proposed in European Patent Application No. 85307915.0 (Publication No. 0188875) of even filing date to facilitate the fastening of a seat belt by attaching an end of a seat belt to a free end of a rotary arm and forwardly rotating the rotary arm in response to the closing action of the door.

In addition, EP—0175493 (published on 26.3.86) discloses a seat belt device for a vehicle in which a two part reach arm is provided at one side of the front seat. The first part of said two part reach arm is rotatably mounted so as to be swingable back and forth and the second part of said two part reach arm is hinged to said first part so as to be swingable towards the front seat passenger. This enables the front seat passenger to more easily reach a seat belt connected to said second part of said two part reach arm.

In the above prior art the rotary arm can be an obstacle to a person in getting into the rear seat of the vehicle. In particular, when the rotary arm is in its backwardly inclined position, if the upper side surface of the rotary arm protrudes from the lower edge of the opening for the door, it will not only be an obstacle for a passenger in getting into the rear seat but also may be stepped upon by the passenger in the rear seat and it may cause a malfunction of the belt forwarding device.

In view of such problems of a seat belt forwarding device, the present invention seeks to provide a rotary arm for a seat belt forwarding device, in which the upper side surface of the rotary arm will not protrude from the lower edge of a door opening when the rotary arm is in its backwardly inclined position, which is comfortable to wear as part of the seat belt.

According to the present invention, there is provided a rotary arm for a seat belt forwarding device of a type in which an end of a seat belt is attached to a free end of the rotary arm which is adapted to be driven by a rotary unit, comprising:

a first portion which is adapted to be rotatively driven by the rotary unit; and a second portion extending from the first portion and hinged to the first portion in such a manner that the second portion may bend toward a wearer of a seat belt; a central axial line of the second portion being offset relative to a rotational axial line of the first portion on a plane perpendicular to the rotational axial line of the first portion in such a manner that the central axial line of the second portion may be located below the rotational axial line of the first portion when the rotary arm is in its backwardly inclined position, wherein the first portion comprises a first arm member and the second portion comprises a second arm member which is hinged to the first arm member by way of a hinge pin extending perpendicularly to both the rotational axial line of the first portion and the central axial line of the second portion, and wherein the first and the second arm members are covered by a casing made of synthetic resin material, the casing being provided with a groove along the bending line of the hinge and notches in side ends of the casing adjacent to the groove.

Since the rotary arm can thus bend, at its middle part, towards the wearer of the seat belt, the rotary arm, as part of the seat belt, will not apply uneven pressure to the wearer of the seat belt.

The present invention will now be shown and described in the following in the terms of concrete embodiments thereof with reference to the appended drawings, in which:

Figure 1 is a general perspective view of a seat belt forwarding device to which a rotary arm according to this invention is applied;

Figure 2 is a partly broken-away side view of the rotary arm according to this invention;

Figure 3 is a sectional view taken along line III—III of Figure 2;

Figure 4 is a schematic side view of the rotary arm according to this invention in its backwardly inclined position; and

Figure 5 is a schematic side view of a rotary arm which is not based on the present invention in its backwardly inclined position.

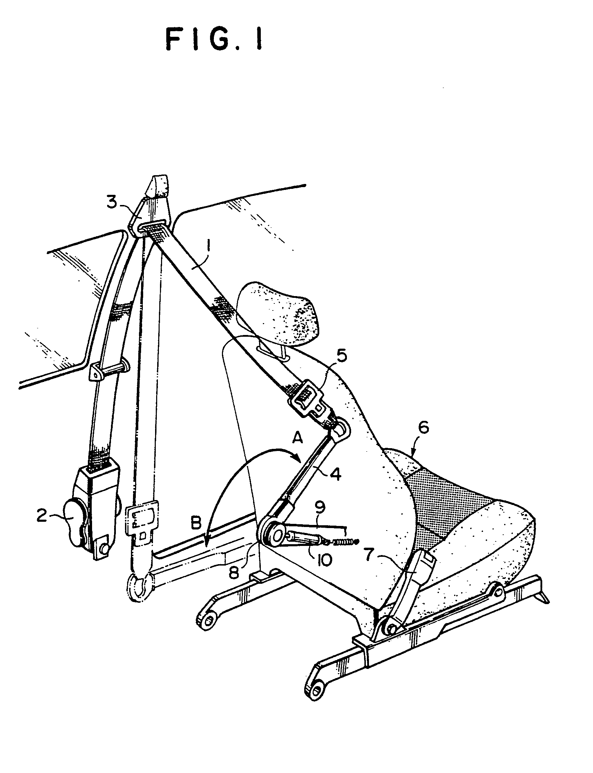

Figure 1 is a general perspective view of a seat belt forwarding device according to this invention. The seat belt 1 is attached to the free end of a rotary arm 4 after being taken out from a belt retractor 2 and passing through a through ring 3. When the door is open, the rotary arm 4 is in a backwardly inclined position as indicated by an arrow B and imaginary lines, and, as the door is closed, the rotary arm 4 rotates in a forwardly direction as indicated by an arrow A. A tongue plate 5 is attached to the seat belt 1 near its free end and, once the rotary arm 4 has inclined forwardly, a passenger seated in a seat 6 can readily engage the tongue plate 5 with a buckle 7 which is attached to the other side of the seat assembly. Since the seat belt 1 will be located in a position which is suitable for the passenger to fasten the seat belt, the use of the seat belt is effectively encouraged without giving him any constraining impression.

It is possible to utilize drive sources of various types for driving the seat belt forwarding device, in particular its rotary arm, but, according to this embodiment, the force applied to the door to close it is transmitted to a rotary unit 8 which is connected to the rotary arm 4 by way of a control cable 9 whose one end is connected to a door checker (not shown in the drawings) provided in a door panel, as a pulling force of the control cable, and the rotary arm 4 is thus driven with the closing force applied to the door without using any other special drive source. Detailed description of the rotary unit will be found in European Patent Application No. 85307915.0 (Publication No. 0188875) of even filing date mentioned above.

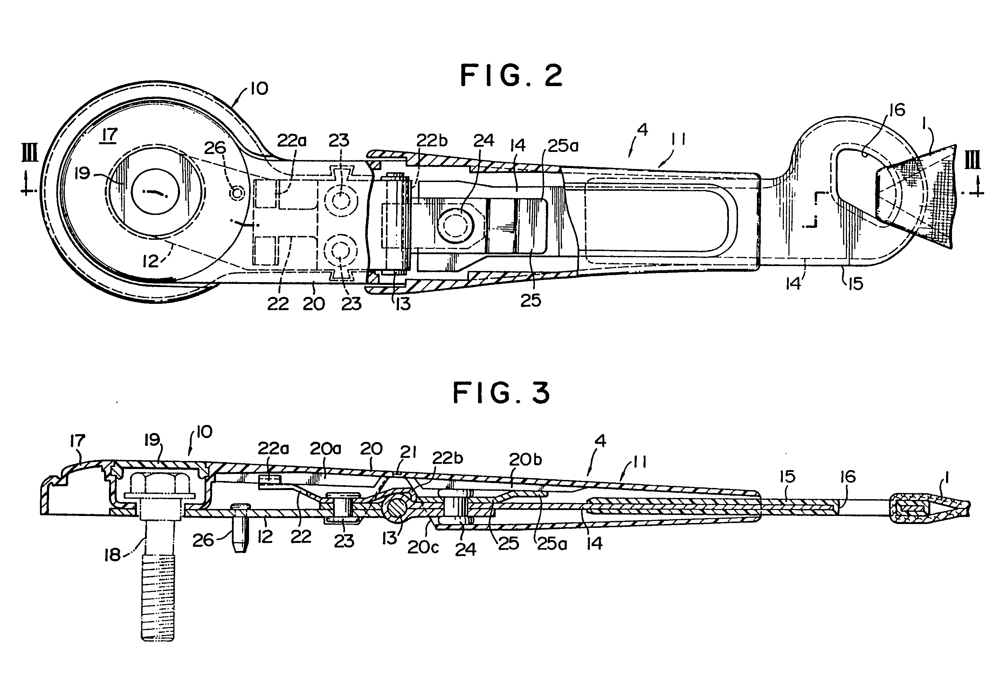

Figures 2 and 3 show the rotary arm according to this invention. This rotary arm 4 comprises a first portion 10 and a second portion 11. Within the first portion 10, a first arm member 12 consisting of a metal plate is attached to the rotary unit 8 (Figure 1) by way of a bolt 18 and a positioning pin 26. The first arm member 12 extends radially from the portion thereof surrounding the central bolt 18 and is then bent in a plane perpendicular to the axial line of the bolt 18. And a second arm member 14, which is located within the second portion 11, is connected to the free end of the first arm member 12 by way of a hinge pin 13 and extends along the same axial line as the free end of the first arm member 12. Therefore, when the rotary arm 4 is in its backwardly inclined position, the central line of the second portion 11 is offset to be lower than the bolt 18 which is the rotational center of the first arm member 12.

Since the free end of the first arm member 12 is connected to second arm member 14 by way of the hinge pin 13, the second arm member 14 may rotate downwardly in the sense of Figure 3 or, in other words, toward the passenger when the rotary arm 4 is in its forwardly inclined position. The free end of the second arm member 14 is provided with an opening and resin 15 is molded around the free end to define an engagement opening 16 for engaging the free end of the seat belt 1.

The first arm member 12 and the second arm member 14 are covered by a central casing 17 and a casing extension 20 which are integrally formed by, for instance, polypropylene. Numeral 19 denotes a plug plate for covering a hole provided in the central casing 17 for fastening the bolt 18. The casing extension 20 is provided with a polypropylene hinge 21, consisting of a groove extending perpendicularly relative to the axial line of the casing extension, adjacent to the hinge pin 13 and notches 20c on both side ends of the casing extension 20 adjacent to the polypropylene hinge 21, so that the casing extension 20 may be freely bent relative to the central casing 17 according to the hinge motion of the second arm member 14 relative to the first arm member 12.

The central casing 17 is fixedly secured with the first arm member 12 by the bolt 18, and the casing extension 20, provided with inwardly projecting ribs 20a and 20b, is fixed relative to the first and the second arm members 12 and 14 with the ribs 20a and 20b engaging free ends 22a and 25a of retaining members 22 and 25 which are fixedly secured to the arm members by rivets 23 and 24. An extension 22b provided in the base end of the retaining member 22 serves as a stopper which prevents the second arm member 14 from rotating upwardly in the sense of Figure 3 or, in other words, away from the passenger when the arm 4 is in its forwardly inclined position.

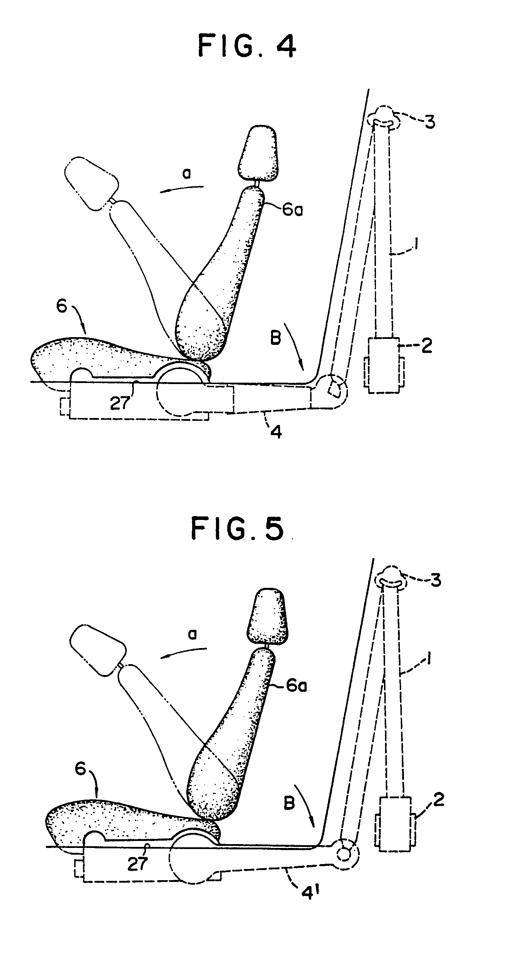

Figure 5 shows a case in which a normal arm 4', which is not based on the present invention, is used with the seat belt forwarding device and, since the main portion of the rotary arm 4' protrudes from the lower edge 27 of the door opening, it may become an obstacle for a passenger in getting into the rear seat and may become a cause of a failure of the seat belt forwarding device by being stepped onto by the passenger.

Figure 4 shows a case in which the rotary arm 4 according to this invention is used with the seat belt forwarding device and, according to this rotary arm, since the second portion is offset relative to the first portion so that the second portion may be lower than the first portion, the rotary arm will not protrude from the lower edge 27 of the door opening, and not only the rotary arm 4 will not obstruct the passenger from getting into and out of the rear seat but also the rotary arm will not be damaged by being stepped thereonto.

Although Figure 4 refers to a case in which the vehicle is a two-door passenger car and a seat back 6a of the front seat 6 inclines forwardly as indicated by an arrow a when a passenger is to get into the rear seat, the present invention may also be applied to other vehicles including four-door passenger cars.

Thus, according to this invention, since the usability of the seat belt forwarding device can be improved by providing an offset to the shape of the rotary arm 4 and preventing it from becoming an obstacle in getting into the vehicle, its effect is substantial.

**Claims**

1. A rotary arm (4) for a seat belt forwarding device of a type in which an end of a seat belt (1) is attached to a free end of the rotary arm (4) which is adapted to be driven by a rotary unit (8), comprising:

a first portion (10) which is adapted to be rotatively driven by the rotary unit (8); and a second portion (11) extending from the first portion and hinged to the first portion (10) in such a manner that the second portion may bend toward a wearer of a seat belt; a central axial line of the second portion being offset relative to a rotational axial line of the first portion on a plane perpendicular to the rotational axial line of the first portion in such a manner that the central axial line of the second portion may be located below the rotational axial line of the first portion when the rotary arm is in its backwardly inclined position, wherein the first portion comprises a first arm member (12) and the second portion comprises a second arm member (14) which is hinged to the first arm member by way of a hinge pin (13) extending perpendicularly to both the rotational axial line of the first portion and the central axial line of the second portion, and wherein the first and the second arm members are covered by a casing (17, 20) made of synthetic resin material, the casing being provided with a groove (21) along the bending line of the hinge (13) and notches (20c) in side ends of the casing adjacent to the groove.

2. A rotary arm for a seat belt forwarding device as claimed in claim 1, wherein the first arm member (12) is provided with a stopper piece (22b) which, by engaging with a part of the second arm member, prevents the motion of the second arm member away from the wearer of the seat belt beyond a position at which the first arm member and the second arm member align along a single straight line.

3. A rotary arm for a seat belt forwarding device as claimed in claim 1 or 2, wherein a pivot member (18) passes through both the casing and the first arm member at the rotational center of the first portion.

**Patentansprüche**

1. Drehbarer Ausleger (4) für eine Sicherheitsgurtführungsvorrichtung jener Bauart, in welcher ein Ende eines Sicherheitsgurts (1) am freien Ende des durch eine Schwenkeinheit (8) antreibbaren drehbaren Auslegers (4) befestigt ist, mit

einem durch die Schwenkeinheit (8) verdrehbaren ersten Abschnitt und einem vom ersten Abschnitt ausgehenden und solcherart an den ersten Abschnitt (10) angelenkten zweiten Abschnitt (11), daß dieser zweite Abschnitt in Richtung zum Träger eines Sicherheitsgurts abgewinkelt werden kann, wobei eine zentrale axiale Linie des zweiten Abschnitts gegenüber der Rotationsachse des ersten Abschnitts in einer zur Rotationsachse des ersten Abschnitts senkrechten Ebene solcherart versetzt ist, daß die zentrale axiale Linie des zweiten Abschnitts bei nach hinten geneigter Lage des drehbaren Auslegers unter die Drehachse des ersten Abschnitts gebracht werden kann, und wobei der erste Abschnitt einen ersten Armteil (12) und der zweite Abschnitt einen am ersten Armteil mittels eines sich senkrecht zur Drehachse des ersten Abschnitts und auch senkrecht zur zentralen axialen Linie des zweiten Abschnitts erstreckenden Angelzapfens (13) angelenkten zweiten Armteil (14) aufweist und wobei der erste Armteil und der zweite Armteil von einem Gehäuse (17, 20) aus Kunststoff abgedeckt sind und das Gehäuse mit einer Nut (21) entlang der Knicklinie der Angel (13) und mit Kerben (20c) in seitlichen Enden des Gehäuses benachbart der Nut ausgestattet ist.

2. Drehbarer Ausleger für eine Sicherheitsgurtführungsvorrichtung nach Anspruch 1, worin der erste Armteil (12) mit einem Anschlagstück (22b) ausgestattet ist, welches durch Anlage an einem Teil des zweiten Armteils verhindert, daß der zweite Armteil vom Träger des Sicherheitsgurtes weg über eine Stellung hinausbewegt wird, in welcher der erste Armteil und der zweite Armteil in einer geraden Fluchtlinie liegen.

3. Sicherheitsgurtführungsvorrichtung nach Anspruch 1 oder 2, worin sich ein Drehzapfen (18) im Bereich des Drehmittelpunktes des ersten Abschnittes sowohl durch das Gehäuse als auch durch den ersten Armteil hindurcherstreckt.

**Revendications**

1. Un bras rotatif (4) pour un dispositif de guidage d'une ceinture de sécurité d'un type dans lequel une extrémité d'une ceinture de sécurité (1) est attachée à une extrémité libre du bras rotatif (4) qui est adapté pour être dirigé par une unité rotative (8), comprenant:
une première partie (10) qui est adaptée à être dirigée par rotation par l'unité rotative (8); et une seconde partie (11) s'étendant à partir de la première partie et articulée à la première partie (10) d'une manière telle que la seconde partie puisse plier vers la personne qui porte la ceinture de sécurité; une ligne d'axe central de la seconde partie étant décalée par rapport à une ligne d'axe de rotation de la première partie sur un plan perpendiculaire à la ligne de l'axe de rotation de la première partie de manière telle que la ligne d'axe central de la seconde partie puisse être située sous la ligne de l'axe de rotation de la première partie quand le bras rotatif est dans sa position inclinée vers l'arrière, caractérisé en ce que la première partie comprend un premier élément bras (12) et la seconde partie comprend un second élément bras (14) qui est articulé au premier élément bras au moyen d'un axe d'articulation (13) s'étendant perpendiculairement à la fois à la ligne d'axe de rotation de la première partie et à la ligne d'axe central de la seconde partie, et en ce que les premiers et second éléments bras sont couverts d'une gaine (17, 20) faite de matériau de résine synthétique, la gaine étant fournie avec une gorge (21) le long de la ligne de pliage de l'articulation (13) et avec des encoches (20c) dans les extrémités de côté de la gaine attenant à la gorge.

2. Un bras rotatif pour un dispositif de guidage d'une ceinture de sécurité comme revendiqué en revendication 1, dans lequel le premier élément bras (12) est fourni avec une pièce de blocage (22b) qui, par engagement avec une partie du second élément bras, empêche le mouvement du second élément bras de s'éloigner de la personne qui porte la ceinture de sécurité au-delà d'une position à laquelle le premier élément bras et le second élément bras s'alignent le long d'une seule ligne droite.

3. Un bras rotatif pour un dispositif de guidage d'une ceinture de sécurité comme revendiqué en revendication 1 ou 2 dans lequel un élément pivot (18) passe à travers la gaine et, à la fois, le premier élément bras au centre de rotation de la première partie.

# FIG. 1

# FIG. 2

# FIG. 3

EP 0 181 745 B1

# FIG. 4

# FIG. 5